# EUROPÄISCHE PATENTSCHRIFT

(11) **EP 3 334 558 B1**
(45) Veröffentlichungstag und Bekanntmachung des Hinweises auf die Patenterteilung: **27.07.2022**
(21) Anmeldenummer: 15750998.5
(22) Anmeldetag: 13.08.2015
(51) Int. Cl.: B23K 26/073, B23K 26/08, B23K 26/34, B23K 26/082

(54) **VERFAHREN ZUM LASERAUFTRAGSSCHWEISSEN**
METHOD FOR LASER BUILD UP WELDING
MÉTHODE DE SOUDAGE PAR RECHARGEMENT AU LASER

(43) Veröffentlichungstag der Anmeldung: 20.06.2018
(73) Patentinhaber: Trumpf Laser- und Systemtechnik GmbH, 71254 Ditzingen (DE)
(72) Erfinder: CANDEL RUIZ, Antonio, 70197 Stuttgart (DE); ABT, Simon, 72669 Unterensingen (DE); KAUFMANN, Sebastian, 72124 Pliezhausen (DE)
(74) Vertreter: Kohler Schmid Möbus Patentanwälte
(86) Internationale Anmeldenummer: PCT/EP2015/068677
(87) Internationale Veröffentlichungsnummer: WO 2017/025148

(56) Entgegenhaltungen:
- WO-A1-2016/026706
- DE-A1- 19 622 471
- JP-A- H03 285 785
- US-A1- 2009 057 278

## Beschreibung

Die Erfindung betrifft ein Verfahren zum Laserauftragsschweißen mit den Merkmalen des Oberbegriffs von Anspruch 1.

### Stand der Technik

Ein derartiges Verfahren ist beispielsweise aus der DE 196 22 471 A1 bekannt geworden.

Laserauftragsschweißen ist ein in der industriellen Werkstückbearbeitung etabliertes Verfahren. Beim herkömmlichen Laserauftragsschweißen wird eine Werkstück- bzw. eine Substratoberfläche mittels eines Laserstrahls aufgeschmolzen und dem so ausgebildeten Schmelzbad ein pulverförmiges Material zugeführt. Das dem Schmelzbad zugeführte Pulver wird ebenfalls aufgeschmolzen, so dass sich nach dem Erstarren des aufgeschmolzenen Pulvermaterials und der Werkstückoberfläche eine stoffschlüssig verbundene, insbesondere schmelzmetallurgisch verbundene, Materialschicht bildet. Dieser Vorgang kann je nach Anwendungsfall an verschiedenen Stellen der Werkstückoberfläche bzw. wiederholt über einen größeren zusammenhängenden Bereich der Werkstückoberfläche durchgeführt werden. Gegebenenfalls können auch mehrere Materialschichten aus unterschiedlichen Materialien übereinander auf der Werkstückoberfläche aufgebaut werden, wodurch sogar 3-D Formen mittels Laserauftragsschweißen aufgebracht werden können. Für den Fall, dass metallisches Material aufgetragen wird, wird das Auftragsverfahren auch als "Laser Metal Deposition" (LMD) bezeichnet. Typische Anwendungsfelder für das Laserauftragsschweißen sind im Bereich der Reparatur-, Beschichtungs- und Verbindungstechniken zu finden.

Aus der eingangs genannten DE 196 22 471 A1 D1 ist es bekannt, dass innerhalb des Arbeitsbereichs der strahlformenden Optik beliebige Energieverteilungen durch die Scanfigur des Laserstrahls eingestellt werden können. Der Oberbegriff des Anspruchs 1 basiert auf dieser Druckschrift.

JP H03 285785 A offenbart ein Schweißverfahren, bei dem der Laserfokus auf einer Endlos-Kreisbahn rotiert.

US 2009/057278 A1 offenbart ein Auftragschweißverfahren, bei dem ein pulverförmiger Zusatzwerkstoff über mehrere Kanäle zu beiden Seiten des Laserstrahls zugeführt wird.

Aus der WO 2013/127287 A1 ist beispielsweise ein Beschichtungsverfahren bekannt, bei welchem in einer geschlossenen Prozesskammer ein drehbar gelagertes Werkstück angeordnet ist. Unter Drehen des Werkstücks wird ein Metall auf die Werkstückoberfläche aufgesprüht. Mittels eines Laserstrahls, der durch eine Scanneroptik auf dem drehenden Werkstück hin und her bewegt wird, wird das aufgesprühte Metall aufgeschmolzen. Das Verfahren eignet sich lediglich für kleine, rotationssymmetrische Bauteile, die in einer Prozesskammer angeordnet werden können.

Aus der EP 2 514 533 A2 ist es beispielsweise bekannt, den Querschnitt des Laserstrahls während der Bearbeitung mittels einer Laseroptik zu verändern, um je nach Bearbeitungssituation eine optimierte Ausbildung des Schmelzbades zu erzielen.

In der EP 2 377 641 A2 wird ein Laserauftragsschweißprozess beschrieben, bei welchem die Bewegungsbahn des Laserauftreffpunktes auf der Werkstückoberfläche je nach Bearbeitungsaufgabe variiert wird. Beispielsweise wird eine Bewegungsbahn des Laserauftreffpunktes mit sich wiederholenden Schleifen beschrieben, um einen relativ großen Bereich der Werkstückoberfläche aufschmelzen zu können.

Die DE 10 2008 057 309 B3 beschreibt ein Verfahren zum Laserauftragsschweißen, bei welchem ein Laserstrahl mittels eines Laserbearbeitungskopfes, der eine Laserdüse aufweist, auf eine Werkstückoberfläche gerichtet wird. Ein pulverförmiger Zusatzwerkstoff wird mittels einer Pulverzuführdüse auf die Werkstückoberfläche aufgebracht, die an der Laserdüse vorgesehen ist, auf die Werkstückoberfläche aufgebracht. Die Laser- und die Pulverzufuhrdüse werden zum schichtweisen Auftragen des pulverförmigen Zusatzwerkstoffs gemeinsam relativ zur Werkstückoberfläche bewegt.

Die nachveröffentlichte WO 2016/026706 A1 offenbart, dass die zweidimensionale Energieverteilung des Laserspots auf dem Werkstück dadurch geändert werden kann, dass der Laserstrahl unterschiedlich schnell an- und ausgeschaltet wird oder dass die Geschwindigkeit, mit der sich der Laserstrahl auf dem Werkstück bewegt, geändert wird.

Maßgeblich für die Wirtschaftlichkeit des industriellen Einsatzes von Laserauftragsschweißen ist die Geschwindigkeit, mit welcher der Materialaufbau erfolgen kann, d. h. im Speziellen die Masse oder das Volumen an Material, die bzw. das pro Zeiteinheit mit einer ausreichenden Qualität und ohne erhebliche Verformung des Substrates aufgetragen werden kann.

### Aufgabe der Erfindung

Ausgehend vom Stand der Technik hat sich die Erfindung zur Aufgabe gesetzt, ein Verfahren zum Laserauftragsschweißen bereitzustellen, welches flexibel einsetzbar ist und sich zugleich durch hohe Auftragsraten auszeichnet.

### Beschreibung der Erfindung

Gelöst wird die Aufgabe durch ein Verfahren zum Laserauftragsschweißen mit den Merkmalen von Anspruch 1.

Im Falle eines erfindungsgemäßen Verfahrens zum Laserauftragsschweißen wird ein Zusatzwerkstoff auf wenigstens einen Bereich einer Oberfläche eines Werkstücks aufgebracht. Um einen stoffschlüssigen Materialauftrag bzw. Schichtaufbau des Zusatzwerkstoffs auf der Werkstückoberfläche zu erzielen, wird der aufgebrachte Zusatzwerkstoff wenigstens teilweise mittels eines Laserstrahls aufgeschmolzen und/oder ein Bereich der Werkstückoberfläche mittels des Laserstrahls aufgeschmolzen.

Je nach Anwendungsfall kann das Auftragsschweißen unterschiedlich durchgeführt werden. Beispielsweise kann (hauptsächlich) der Bereich der Werkstückoberfläche, auf dem der noch nicht aufgeschmolzene Zusatzwerkstoff aufliegt, mit dem Laserstrahl beaufschlagt werden. Durch die thermische Energie des Laserstrahls werden der Zusatzwerkstoff und die darunterliegende Werkstückoberfläche aufgeschmolzen.

Der Laserstrahl wird von einer Laserbearbeitungseinrichtung bereitgestellt. Mittels der Laserbearbeitungseinrichtung wird der Laserstrahl auf den zu bearbeitenden Bereich der Werkstückoberfläche gerichtet. Die Laserbearbeitungseinrichtung weist eine Laserdüse auf, die einen Arbeitsbereich definiert, innerhalb dessen der Laserstrahl auf die Werkstückoberfläche auftrifft. Die Grenzen des Arbeitsbereiches einer Laserdüse sowie die Geometrie vom erzeugten Pulverfokus werden vor allem durch die Form und Größe der Düsenöffnung bzw. Düsenöffnungen definiert. Im Arbeitsbereich einer Laserdüse erfolgt eine Laserbearbeitung unter definierten Zuständen. In der Regel weist die Laserdüse eine Schutzgas- oder auch eine zusätzliche Prozessgaszufuhr auf, so dass eine optimale Schweißbearbeitung in dem Arbeitsbereich der Laserdüse erfolgen kann.

Um einen größeren Bereich einer Werkstückoberfläche mit einem Zusatzwerkstoffauftrag zu versehen, wird die Auftreffstelle des Laserstrahls auf der Werkstückoberfläche durch eine Abtastbewegung verändert, bei welcher sich die Laserdüse und die Werkstückoberfläche relativ zueinander bewegen. Dank der Abtastbewegung wird demnach der Arbeitsbereich, in dem eine Laserbearbeitung unter definierten Zuständen erfolgen kann, an unterschiedlichen Stellen der Werkstückoberfläche positioniert. Zur Schweißbearbeitung muss erfindungsgemäß nicht unbedingt die gesamte zu bearbeitende Oberfläche gleichzeitig z. B. unter Schutzgas gesetzt werden bzw. der Prozess in einer geschlossenen Prozesskammer durchgeführt werden, sondern nur die Laserdüse über den relativ kleinen, jeweils gerade zu bearbeitenden Bereich positioniert werden, um nicht gewünschte Oxidationsvorgänge zu vermeiden. Natürlich kann es trotzdem sinnvoll sein, weitere Schutzvorrichtungen, wie z. B. eine Strahlenschutzeinrichtung usw., zusätzlich zur Laserdüse mitzuführen.

Der Abtastbewegung wird erfindungsgemäß eine Zusatzbewegung überlagert, durch welche die Auftreffstelle des Laserstrahls auf der Werkstückoberfläche innerhalb des Arbeitsbereiches der Laserdüse verändert wird. So kann innerhalb des Arbeitsbereiches unter definierten Zuständen ein relativ großer Bereich der Werkstückoberfläche aufgeschmolzen werden. Der Laserstrahl verläuft bei der Zusatzbewegung auf einer vordefinierten Bewegungsbahn relativ zu der Laserdüse. Vorzugsweise kann die Bewegungsbahn je nach Anwendungsfall definiert werden, um ein möglichst gutes Bearbeitungsergebnis zu erreichen.

Die Auftreffstelle des Laserstrahls auf der Werkstückoberfläche, welche auch als Brennfleck oder Laserspot usw. bezeichnet wird, kann unterschiedliche Querschnittformen aufweisen. Die Größe, die Form, der Querschnitt oder der Durchmesser usw. des sich ausbildenden Brennflecks des Laserstrahls auf der Werkstückoberfläche (mit oder ohne Zusatzwerkstoff) wird bekanntermaßen durch verschiedene Faktoren beeinflusst. In der Regel wird die Auftreffstelle bzw. der Brennfleck aber wenigstens nahezu kreisförmig sein. Eine Veränderung der Auftreffstelle innerhalb des Arbeitsbereiches der Laserdüse geht mit einer Verlagerung des Mittelpunktes oder Zentrums des Brennfleckes einher. Es versteht sich, dass die Veränderung der Auftreffstelle des Laserstrahls auf der Werkstückoberfläche und zwar innerhalb des Arbeitsbereiches der Laserdüse durch eine Bewegung des Laserstrahls relativ zu der Laserdüse bewirkt wird.

Insbesondere hat sich gezeigt, dass anstelle eines gleichzeitigen Aufschmelzens eines relativ großen Bereichs durch einen relativ großen Brennfleck des Laserstrahls, sich bessere Verhältnisse einstellen, wenn ein kleiner Brennfleck zeitlich versetzt, mit einer definierten Bewegungsbahn und ggfs. wiederholt einen Bereich überfährt. Es bildet sich ein gleichmäßigeres Schmelzbad aus. Dank des verbesserten Schweißvorgangs kann die Aufschmelzrate erhöht werden, ohne dass Qualitätseinbußen, wie z. B. ein Einbrennen des Werkstücks oder des Zusatzwerkstoffs durch lokale Überhitzung erfolgen. Daher kann insgesamt die Aufbaurate signifikant erhöht werden.

Von besonderer praktischer Bedeutung ist das Auftragen eines pulverförmigen Zusatzwerkstoffes. Oft handelt es sich bei dem pulverförmigen Zusatzwerkstoff und/oder der Werkstückoberfläche, auf welche der Zusatzwerkstoff aufgetragen werden soll, um metallisches Material und bei dem Verfahren um das "Laser Metal Deposition"-Verfahren.

Erfindungsgemäß wird die Zusatzbewegung mittels einer Scanneroptik erzeugt. Die Scanneroptik zeichnet sich durch eine hohe Dynamik, Genauigkeit und Flexibilität aus. Zudem ist eine Scanneroptik in einen Laserschweißkopf integrierbar, welcher eine gut handhabbare Laserbearbeitungseinrichtung darstellt.

Im Falle eines besonders bevorzugten Ausführungsbeispiels weist die Zusatzbewegung eine Komponente längs und/oder quer zur Abtastbewegung auf. Durch eine quer zur Abtastbewegung und insbesondere parallel zur Werkstückoberfläche gerichtete Komponente der Zusatzbewegung wird der während der Abtastbewegung bearbeitbare Oberflächenbereich breiter. Wenn beispielsweise eine relativ große zusammenhängende Fläche eines Werkstücks beschichtet werden soll, muss dieser große Oberflächenbereich gegebenenfalls mit einer Vielzahl aufeinanderfolgender Abtastbewegungen abgefahren werden. Wenn der bearbeitbare Bereich bei einer Abtastbewegung breiter ist, kann die Anzahl der erforderlichen Wiederholungen reduziert werden, wodurch sich insgesamt die Prozesszeit reduzieren lässt.

Durch eine längs zur Abtastbewegung und insbesondere parallel zur Werkstückoberfläche gerichtete Komponente der Zusatzbewegung kann beispielsweise sichergestellt werden, dass die Bereiche, die in Richtung der Abtastbewegung aufeinander folgen, trotz einer variierenden Geschwindigkeit der Abtastbewegung (z. B. beim Abbremsen oder Beschleunigen oder bei einem gekrümmten Verlauf der Abtastbewegung) gleich lang beaufschlagt werden. Insgesamt kann daher eine dynamischere Abtastbewegung ausgeführt werden, ohne dass Qualitätseinbußen entstehen.

Besonders bevorzugt ist eine Variante, bei welcher die Zusatzbewegung sowohl quer als auch längs der Abtastbewegung gerichtet ist.

Um die Zusatzbewegung erzeugen zu können, kann vorzugsweise eine 1D-, 2D- oder auch 3D-Scanneroptik verwendet werden. Besonders bevorzugt ist der Einsatz einer Planfeldscanneroptik, bei welcher sichergestellt ist, dass der Laserstrahl im gesamten Arbeitsbereich der Laserdüse mit gleicher Qualität arbeiten kann.

Bei der Bearbeitung eines nicht ebenen Bereichs der Werkstückoberfläche kann im Rahmen der Zusatzbewegung auch eine Höhenverstellung des Laserfokus, insbesondere durch die 3D-Scanneroptik, erfolgen.

Bei einer bevorzugten Variante der Erfindung wird durch die Zusatzbewegung die Auftreffstelle des Laserstrahls auf der Werkstückoberfläche relativ zu einer Zusatzwerkstoff-Zuführeinrichtung verändert. Demnach kann durch die Zusatzbewegung die Position der Auftreffstelle des Laserstrahls gegenüber der Zusatzwerkstoff-Zuführeinrichtung verändert werden, um im Laufe der Abtastbewegung je nach Bearbeitungssituation und -aufgabe ein optimales Muster einstellen zu können. Insbesondere kann somit die Auftreffstelle des Laserstrahls relativ zu der Auftreffstelle des Zusatzwerkstoffes auf der Werkstückoberfläche verändert werden. Vorzugsweise kann die Auftreffstelle aufgrund der Zusatzbewegung Bereiche der Werkstückoberfläche ohne und mit bereits aufgebrachtem Zusatzwerkstoff abfahren.

Erfindungsgemäß verläuft die Zusatzbewegung relativ zu der Laserdüse entlang einer sich periodisch wiederholenden Bewegungsbahn, und zwar einer geschlossenen Endlosbahn. Durch die periodische Wiederholung, welche auf den Anwendungsfall und die gleichzeitig erfolgende Abtastbewegung abgestimmt ist, kann sichergestellt werden, dass die gesamte zu bearbeitende Werkstückoberfläche gleichmäßig bzw. optimal von dem Laserstrahl beaufschlagt wird. Die Programmierung des Verfahrens vereinfacht sich, indem verschiedene (erprobte) periodische Bewegungsbahnen vorgegeben werden. Die geschlossene Endlosbahn ergibt eine besonders antriebsschonende und präzise steuerbare Variante. Ein abruptes Stoppen bzw. eine Bewegungsumkehr der Zusatzbewegung wird auf diese Weise vermieden.

Erfindungsgemäß verläuft die geschlossene Endlosbahn entlang des Randes des durch die Laserdüse definierten Arbeitsbereichs. Insbesondere hat sich in der Praxis bewährt, dass bei einer Laserdüse mit rechteckförmiger Düsenöffnung (und einem daraus resultierenden rechteckförmigen Arbeitsbereich) die Endlosbahn ebenfalls auf einer entsprechenden rechteckförmigen Endlosbahn verläuft. In den vier Eckbereichen verläuft die Endlosbahn vorzugsweise entlang einer etwas abgerundeten Bahn.

Besonders bewährt hat sich als geschlossene Endlosbahn eine elliptische Bewegungsbahn. Vorzugsweise weist die elliptische Bewegungsbahn unterschiedlich lange Hauptachsen auf. Die elliptische Bewegungsbahn verläuft relativ zu der jeweils aktuellen Abtastbewegung derart, dass die längere Hauptachse quer zur Abtastbewegung gerichtet ist. Der Bearbeitungsbereich wird auf diese Weise wesentlich verbreitert.

Erfindungsgemäß wird die Laserleistung in Abhängigkeit der Position der Auftreffstelle entlang der Bewegungsbahn der Zusatzbewegung verändert. Auf diese Weise kann z. B. bei einem länglichen Arbeitsbereich der Laserdüse in den äußeren Randbereichen des Arbeitsbereichs die Leistung reduziert werden, da dort der Laserstrahl durch die erforderliche Bewegungsumkehr gegebenenfalls länger auf der Werkstückoberfläche verweilt, woraus ein zu hoher Energieeintrag, welcher z. B. zum Einbrennen führen kann, resultieren könnte. Ziel dabei ist, homogene Spuren, was Qualität und Schichtstärke betrifft, aus dem Zusatzwerkstoff aufzutragen.

Auch kann bei einer besonders bevorzugten Variante die Laserleistung unterschiedlich sein, wenn aufgrund der Zusatzbewegung ein Bereich der Werkstückoberfläche mit oder ohne Zusatzwerkstoff überfahren wird.

Ergänzend zur Laserleistung können während der Zusatzbewegung auch andere Bearbeitungsparameter verändert werden, um ein an die jeweilige Bearbeitungsaufgabe optimal angepasstes Schweißverfahren zu erzielen. Als Parameter kommen beispielsweise die Strahlform, wie der Strahlquerschnitt, die Größe des Brennflecks oder auch die Polarisierung des Laserstrahls, Frequenz der Umlenkspiegel und damit die Umlaufgeschwindigkeit der Einzelkontur und die resultierende Geschwindigkeit der Strahlführungsmaschine in Frage.

Insbesondere die Frequenz der Umlenkspiegel und damit die Umlaufgeschwindigkeit auf einer geschlossenen Endlosbahn der Zusatzbewegung stellen wichtige Parameter dar, um das Bearbeitungsergebnis zu optimieren.

Eine Vorrichtung zum Laserauftragsschweißen weist eine Zusatzwerkstoff-Zuführeinrichtung und eine Laserbearbeitungseinrichtung auf, wobei die Laserbearbeitungseinrichtung eine Laserdüse umfasst, die einen Arbeitsbereich definiert, wobei mittels der Laserbearbeitungseinrichtung ein Laserstrahl auf die Werkstückoberfläche und/oder auf die mit Zusatzwerkstoff versehene Werkstückoberfläche gerichtet werden kann.

Zum Erzeugen der bereits erläuterten Abtastbewegung, bei welcher die Laserdüse und die Werkstückoberfläche unter Veränderung der Auftreffstelle des Laserstrahls auf der Werkstückoberfläche relativ zueinander bewegt werden, weist die Vorrichtung außerdem eine Abtast-Bewegungseinrichtung auf. Dabei ist zusätzlich zur Abtast-Bewegungseinrichtung eine Zusatz-Bewegungseinrichtung vorgesehen, mittels derer die bereits erwähnte Zusatzbewegung erzeugbar ist, durch welche die Auftreffstelle des Laserstrahls auf der Werkstückoberfläche innerhalb des Arbeitsbereiches der Laserdüse verändert werden kann.

Vorzugsweise ist für die Laserdüse eine Schutz- und/oder Prozessgaszuführeinrichtung vorgesehen, welche dem Arbeitsbereich bzw. dem Strahlengang Schutz- und/oder Prozessgas zuführt.

Die Laserdüse kann unterschiedlich ausgebildet sein. So kann sie nur teilweise den Laserstrahl umgeben. Vorzugsweise handelt es sich aber um eine vollständig den Laserstrahl umgebende Laserdüse. Vorteilhafterweise ist die Laserdüse mit einem Kühlkreislauf versehen, um die beim Schweißvorgang einwirkende Wärme abzuführen.

Als besonders günstig hat sich herausgestellt, wenn die Laserdüse eine Düsenöffnung in Form eines länglichen Spaltes aufweist. Dabei kann der Spalt in Abhängigkeit der jeweils aktuellen Abtastbewegung vorteilhafterweise derart ausgerichtet sein, dass die Längsachse (größere Erstreckung) quer zur Bewegungsrichtung der Abtastbewegung verläuft.

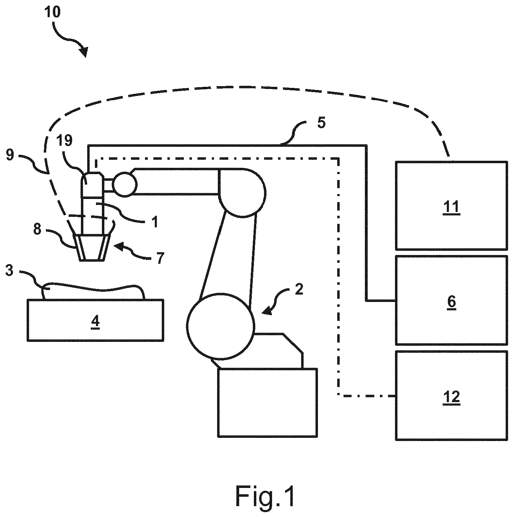

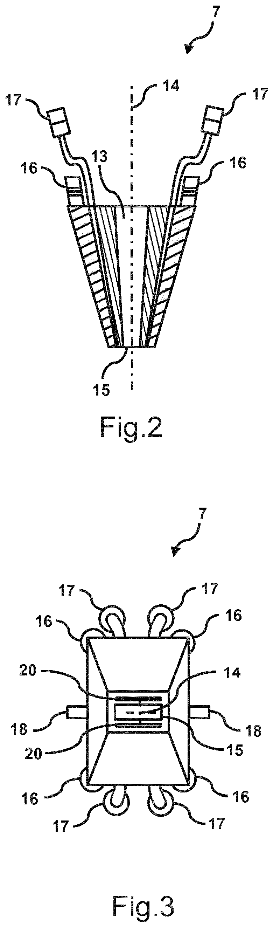

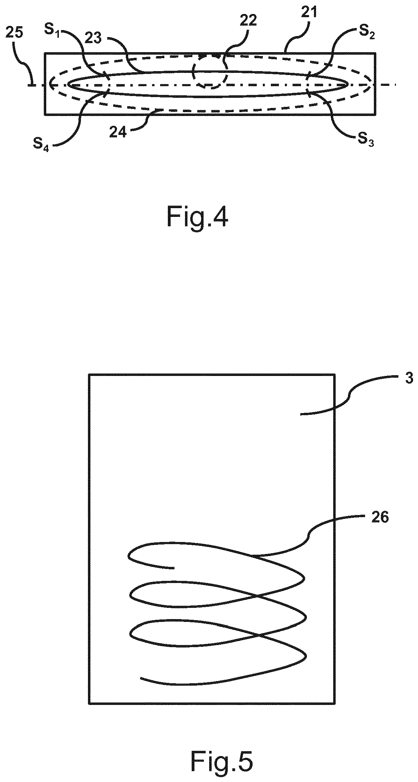

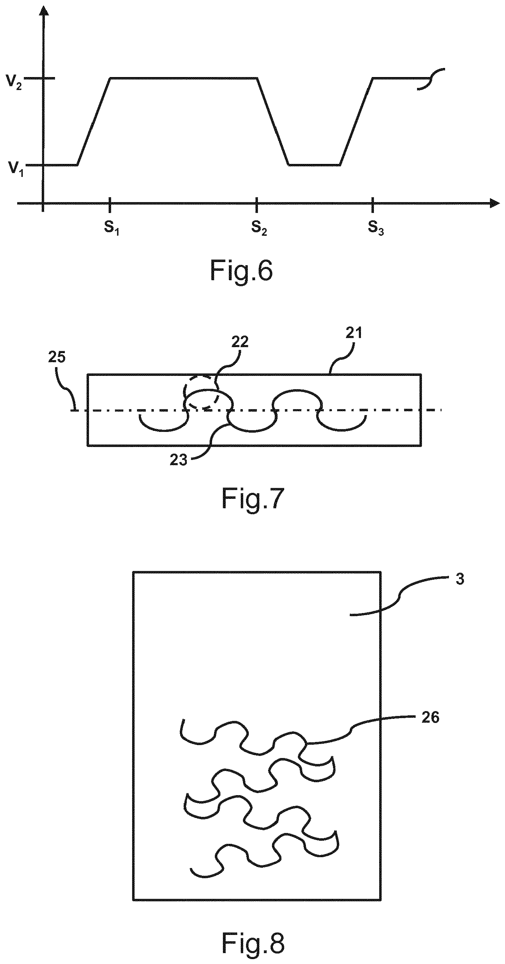

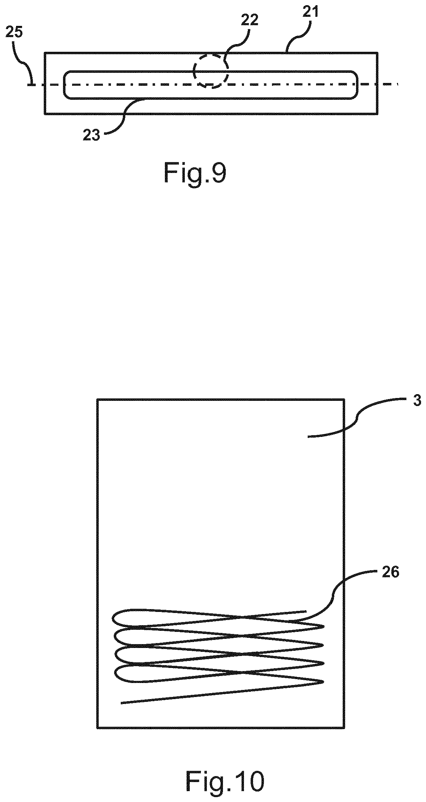

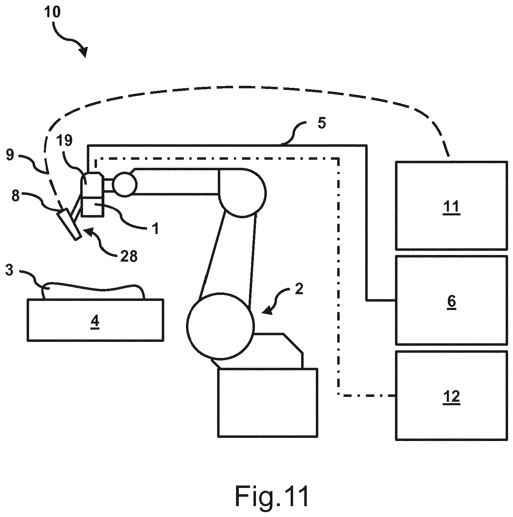

## Patentansprüche

1. Verfahren zum Laserauftragsschweißen, bei welchem ein Zusatzwerkstoff, insbesondere ein pulverförmiger Zusatzwerkstoff, auf wenigstens einen Bereich einer Oberfläche eines Werkstücks (3) aufgebracht wird, wobei der Zusatzwerkstoff wenigstens teilweise mittels eines Laserstrahls aufgeschmolzen und/oder ein Bereich der Werkstückoberfläche mittels eines Laserstrahls aufgeschmolzen wird derart, dass sich nach dem Erstarren ein stoffschlüssiger Materialauftrag des Zusatzwerkstoffs auf der Werkstückoberfläche ergibt, wobei der Laserstrahl auf die Werkstückoberfläche mittels einer Laserbearbeitungseinrichtung (1) gerichtet wird, wobei die Laserbearbeitungseinrichtung (1) eine Laserdüse (7) aufweist, die einen Arbeitsbereich (21) definiert, innerhalb dessen der Laserstrahl auf die Werkstückoberfläche auftrifft, wobei die Auftreffstelle des Laserstrahls auf der Werkstückoberfläche durch eine Abtastbewegung verändert wird, bei welcher sich die Laserdüse (7) und die Werkstückoberfläche relativ zueinander bewegen, und wobei der Abtastbewegung eine Zusatzbewegung überlagert wird, durch welche die Auftreffstelle des Laserstrahls auf der Werkstückoberfläche innerhalb des Arbeitsbereiches (21) der Laserdüse (7) verändert wird,
wobei die Zusatzbewegung durch eine Bewegung wenigstens eines Laserspiegels einer Scanneroptik (19) erzeugt wird, und **dadurch gekennzeichnet, dass** die Geschwindigkeit der Spiegelbewegung zur Erzeugung der Zusatzbewegung nahezu konstant ist, und die Zusatzbewegung innerhalb des rechteckförmigen Arbeitsbereiches (21) umlaufend entlang des Randes des Arbeitsbereiches (21) auf einer sich periodisch wiederholenden, geschlossenen, elliptischen oder rechteckförmigen Endlosbahn (23) verläuft und die Laserleistung in den äußeren Randbereichen des rechteckförmigen Arbeitsbereiches (21) in Abhängigkeit der Positioniergeschwindigkeit der Auftreffstelle entlang der Bewegungsbahn (23) der Zusatzbewegung reduziert wird, um ein Ein- bzw. Verbrennen des Zusatzwerkstoffes oder der Werkstückoberfläche zu verhindern.

2. Verfahren nach Anspruch 1, **dadurch gekennzeichnet, dass** die Scanneroptik (19) eine Planfeldscanneroptik ist.

3. Verfahren nach einem der vorigen Ansprüche, **dadurch gekennzeichnet, dass** die Zusatzbewegung eine Komponente längs und/oder quer zur Abtastbewegung aufweist.

4. Verfahren nach einem der vorigen Ansprüche, **dadurch gekennzeichnet, dass** durch die Zusatzbewegung die Auftreffstelle des Laserstrahls auf der Werkstückoberfläche relativ zu einer Zusatzwerkstoff-Zuführeinrichtung (8) verändert wird, insbesondere derart, dass die Auftreffstelle aufgrund der Zusatzbewegung Bereiche der Werkstückoberfläche ohne und mit bereits aufgebrachtem Zusatzwerkstoff abfährt.

5. Verfahren nach einem der vorigen Ansprüche, **dadurch gekennzeichnet, dass** im Rahmen der Zusatzbewegung eine Höhenverstellung des Laserfokus, insbesondere durch eine 3D-Scanneroptik, erfolgt.

## Claims

1. Method of laser deposition welding, wherein a filler material, in particular a powdery filler material, is applied to at least one area of a surface of a workpiece (3), wherein the filler material is at least partially melted by means of a laser beam and/or an area of the workpiece surface is melted by means of a laser beam in such a manner that after solidification, a firmly bonded material deposition of the filler material on the workpiece surface is obtained, wherein the laser beam is directed onto the workpiece surface by means of a laser processing device (1), wherein the laser processing device (1) comprises a laser nozzle (7) that defines a working area (21) within which the laser beam hits the workpiece surface, wherein the point of impact of the laser beam on the workpiece surface is changed by a scanning movement, in which the laser nozzle (7) and the workpiece surface move relative to one another and wherein an additional movement is superimposed on the scanning movement through which the point of impact of the laser beam on the workpiece surface is changed within the working area (21) of the laser nozzle (7),
wherein the additional movement is generated by a movement of at least one laser mirror of a scanner optics (19),
and **characterized in that** the speed of the mirror movement for generating the additional movement is almost constant and the additional movement extends within the rectangular working area (21) in a circumferential manner along the edge of the working area (21) on a closed, elliptical or rectangular continuous path (23) in a periodically repeating pattern and the laser power in the outer edge areas of the rectangular working area (21) is reduced in dependence on the positioning speed of the point of impact along the movement path (23) of the additional movement in order to prevent burning-in or burning of the filler material or of the workpiece surface.

2. Method according to claim 1, **characterized in that** the scanner optics (19) is a plane field optics.

3. Method according to one of the preceding claims, **characterized in that** the additional movement has a component longitudinal and/or transverse to the scanning movement.

4. Method according to one of the preceding claims, **characterized in that** due to the additional movement, the point of impact of the laser beam on the workpiece surface relative to a filler material feed direction (8) is changed, in particular in such a manner that the point of impact scans areas of the workpiece surface without and with already deposited filler material due to the additional movement.

5. Method according to one of the preceding claims, **characterized in that** within the scope of the additional movement, the laser focus is adjusted in height, in particular by means of a 3D scanner optics.

## Revendications

1. Procédé de soudage par dépôt laser dans lequel un matériau d'apport, en particulier un matériau d'apport pulvérulent est déposé sur au moins une région d'une surface d'une pièce (3), sachant que ledit matériau d'apport est au moins partiellement fondu au moyen d'un faisceau laser et/ou qu'une région de la surface de la pièce est fondue au moyen d'un faisceau laser, de façon telle qu'il en résulte, à l'issue de la solidification, un dépôt par solidarisation matérielle dudit matériau d'apport sur ladite surface de la pièce, le faisceau laser étant dirigé vers la surface de la pièce au moyen d'un dispositif (1) de traitement au laser, lequel dispositif (1) de traitement au laser est muni d'une buse laser (7) définissant une zone de travail (21) à l'intérieur de laquelle le faisceau laser vient rencontrer la surface de la pièce, sachant que le point d'impact dudit faisceau laser sur ladite surface de la pièce est modifié par un mouvement de balayage au cours duquel la buse laser (7) et ladite surface de la pièce se meuvent l'une par rapport à l'autre et sachant qu'un mouvement additionnel, par lequel ledit point d'impact du faisceau laser sur ladite surface de la pièce est modifié à l'intérieur de la zone de travail (21) de la buse laser (7), est superposé audit mouvement de balayage, lequel mouvement additionnel est engendré par un mouvement d'au moins un miroir laser d'une optique (19) de balayage exploratoire,
**caractérisé par le fait que**
la vitesse du mouvement du miroir visant à engendrer le mouvement additionnel est approximativement constante, et ledit mouvement additionnel s'opère par circulation en boucle à l'intérieur de la zone de travail (21) rectangulaire, le long du bord de ladite zone de travail (21), sur une trajectoire sans fin (23) fermée, elliptique ou rectangulaire, se répétant périodiquement, la puissance du laser étant réduite dans les régions marginales extérieures de ladite zone de travail (21) rectangulaire, en fonction de la vitesse de positionnement du point d'impact le long de ladite trajectoire (23) dudit mouvement additionnel, en vue d'empêcher respectivement un roussissage, voire un brûlage du matériau d'apport ou de la surface de la pièce.

2. Procédé selon la revendication 1, **caractérisé par le fait que** l'optique (19) de balayage exploratoire est une optique de balayage exploratoire à champ plan.

3. Procédé selon l'une des revendications précédentes, **caractérisé par le fait que** le mouvement additionnel présente une composante longitudinalement et/ou transversalement par rapport au mouvement de balayage.

4. Procédé selon l'une des revendications précédentes, **caractérisé par le fait que**, suite au mouvement additionnel, le point d'impact du faisceau laser sur la surface de la pièce est modifié vis-à-vis d'un dispositif (8) d'amenée de matériau d'apport, notamment de telle sorte que, sous l'effet dudit mouvement additionnel, ledit point d'impact parcoure des régions de ladite surface de la pièce dépourvues, et pourvues de matériau d'apport déjà déposé.

5. Procédé selon l'une des revendications précédentes, **caractérisé par le fait qu'**un réglage en hauteur du foyer laser a lieu dans le cadre du mouvement additionnel, en particulier par l'intermédiaire d'une optique de balayage exploratoire en 3D.
